# FASCICULE DE BREVET EUROPEEN

(11) **EP 4 431 341 B1**
(45) Date de publication et mention de la délivrance du brevet: **30.07.2025**
(21) Numéro de dépôt: 24162054.1
(22) Date de dépôt: 07.03.2024
(51) Int. Cl.: B60R 7/02, B60J 5/10, B60R 13/02

(54) **VÉHICULE DOTÉ D'UN ESPACE DE RANGEMENT POUR DES ÉQUIPEMENTS FONCTIONNELS PORTATIFS**
FAHRZEUG MIT STAURAUM FÜR TRAGBARE FUNKTIONSGERÄTE
VEHICLE WITH A STORAGE SPACE FOR PORTABLE FUNCTIONAL EQUIPMENT

(30) Priorité: 14.03.2023 FR 2302332
(43) Date de publication de la demande: 18.09.2024
(73) Titulaire: Renault s.a.s, 92100 Boulogne Billancourt (FR)
(72) Inventeur: BEZEAULT, Loic, 78280 GUYANCOURT (FR)

(56) Documents cités:
- DE-A1- 10 118 425
- FR-A1- 2 966 405
- US-A- 5 702 144
- US-B1- 6 502 885

## Description

La présente invention concerne un véhicule doté d'un espace de rangement pour des équipements fonctionnels portatifs.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

De façon non exhaustive, les équipements fonctionnels portatifs visés par l'espace de rangement d'un véhicule selon l'invention, peuvent comprendre des équipements de sécurité tels qu'un triangle signalant un danger ou un gilet fluorescent, et des équipement destinés à améliorer les conditions d'utilisation dudit véhicule tels qu'un grattoir ou des chiffons.

Actuellement, ces équipements fonctionnels portatifs sont souvent stockés dans le véhicule de façon un peu anarchique, là où il existe des espaces réduits disponibles ou des recoins peu accessibles. En phase de roulage, ces équipements fonctionnels qui ne sont pas forcément solidement arrimés au véhicule, sont susceptibles de se déplacer et de faire du bruit, à chaque fois que le véhicule amorce un virage ou subit une phase de freinage ou d'accélération un peu brutale. De plus, ces équipements peuvent se retrouver sous des bagages ou des marchandises chargés dans le coffre du véhicule, et il faut alors se rappeler qu'ils sont présents dans ledit coffre.

DE10118425A divulgue un véhicule selon le préambule de la revendication 1.

Un véhicule selon l'invention, dispose d'un espace de rangement qui a été aménagé dans une pièce déjà existante dudit véhicule et dont l'intégralité du volume n'est pas exploitée.

L'invention a pour objet un véhicule, avec les caractéristiques de la revendication 1, comprenant un hayon monté pivotant entre une position de fermeture pour laquelle il clôt un coffre arrière dudit véhicule et une position d'ouverture pour laquelle il permet d'accéder audit coffre arrière, ledit hayon comportant un panneau et un caisson constituant un habillage interne dudit hayon et qui est fixé audit panneau.

Selon l'invention, une galerie de rangement s'étendant suivant un axe transversale Y du véhicule est aménagée dans le caisson en étant obturée par le panneau, les deux extrémités de ladite galerie de rangement considérées le long dudit axe transversal Y débouchant chacune sur l'extérieur dudit caisson. Généralement, le panneau de hayon est métallique et l'habillage interne est en matière plastique. Cet habillage interne présente une certaine épaisseur pour, par exemple, loger un moteur d'essuie-glace. Or, une partie de cet habillage présente un volume, qui n'est pas exploité. Une galerie de rangement est ainsi aménagée dans cette partie d'habillage pour créer un espace de rangement supplémentaire dans le véhicule. Cette galerie de rangement, qui a été aménagée dans l'habillage interne du hayon, est obturée partiellement par le panneau de hayon et est assimilable à un canal traversant l'habillage de part en part. La section transversale de ce canal peut être constante ou variable le long dudit canal. Cette galerie de rangement crée un espace de rangement supplémentaire dans le véhicule, dont les dimensions et la localisation au sein dudit véhicule le rendent particulièrement adapté au stockage d'objets de sécurité tels qu'un triangle de signalisation ou un gilet fluorescent. Des chiffons ou un grattoir peuvent également être rangés dans cette galerie. Il suffit ainsi d'ouvrir le hayon pour avoir accès à cette galerie de rangement. Les deux extrémités de la galerie de rangement qui débouchent sur les deux côtés de l'habillage, peuvent, soit demeurées ouvertes, soit être obturées par des enjoliveurs assimilables à des couvercles. La section transversale de la galerie de rangement peut revêtir toute forme, en étant par exemple, circulaire, rectangulaire ou en losange.

Selon une caractéristique possible de l'invention, la galerie de rangement possède une section transversale de dimension constante sur toute sa longueur. Elle permet ainsi de maintenir la structure de l'habillage homogène et symétrique, conférant à ladite structure une robustesse équilibrée.

Selon une caractéristique possible de l'invention, la section transversale de la galerie de rangement est de forme rectangulaire. Il s'agit d'un exemple de forme de galerie de rangement qui est particulièrement adapté à un véhicule selon l'invention, mais qui n'est nullement limitatif. Une telle configuration est favorable à l'utilisation de boites de rangement parallélépipédiques, qui seraient introduites dans la galerie de rangement après avoir été chargées avec des objets.

Selon une caractéristique possible de l'invention, chacune des deux extrémités de la galerie considérées suivant un axe transversal Y du véhicule est obturée par un enjoliveur qui est fixé au caisson et qui permet de retenir les objets qui seraient stockés dans ladite galerie de rangement. Ces enjoliveurs constituent des éléments de retenue des objets qui seraient chargés dans la galerie de rangement. Préférentiellement, ces enjoliveurs sont en matière plastique pour ne pas trop alourdir le véhicule. Ils peuvent être fixés au caisson par exemple à l'aide de vis, de rivets ou par clippage.

Selon une caractéristique possible de l'invention, les enjoliveurs sont fixés au caisson par clippage. Ce mode de fixation ne nécessite aucun outil, la mise en place ou le retrait de ces enjoliveurs pouvant s'effectuer manuellement, sans effort particulier.

Selon une caractéristique possible de l'invention, les enjoliveurs sont ajourés pour permettre de visualiser l'état de remplissage de la galerie de rangement. Le fait d'être ajourés permet aux enjoliveurs de na pas accroitre de façon significative la masse du véhicule. Grâce à ces enjoliveurs ajourés, un individu peut visualiser à travers ceux-ci le contenu de la galerie de rangement.

Selon une caractéristique possible de l'invention, le véhicule comporte au moins une boite de rangement destinée à venir se loger dans la galerie de rangement, ladite boite de rangement étant destinée à stocker des objets. Pour cette configuration, les objets à stocker ne sont pas introduits directement dans la galerie de rangement, mais sont placés préalablement dans une boite avant d'être rangés dans la galerie de rangement. Cette boite de rangement permet de stocker des objets de façon plus ordonnée et donc plus maitrisée, en empêchant que ceux-ci ne se déplacent de façon aléatoire dans la galerie de rangement. Préférentiellement, la boite de rangement a une section transversale légèrement inférieure à celle de la galerie de rangement, de telle sorte qu'elle puisse coulisser dans ladite galerie de rangement, en limitant les jeux avec celle-ci. Avantageusement, cette boite de rangement est rangée dans la galerie de rangement en étant complètement close.

Selon une caractéristique possible de l'invention, le véhicule comporte deux boites de rangement destinées à venir se loger simultanément dans la galerie de rangement, ladite galerie de rangement comprenant une paroi de séparation s'étendant perpendiculairement à un axe longitudinal de la galerie de rangement et destinée à créer deux compartiments dans la galerie de rangement pour recevoir chacun une boite de rangement. Ces deux boites de rangement peuvent avoir la même longueur, ou être de longueurs différentes. Ainsi, si les deux boites de rangement ont la même longueur, la paroi de séparation occupera une position centrale dans la galerie de rangement, et si elles sont de longueurs différentes, la paroi de séparation occupera un place excentrée dans ladite galerie de rangement. Les deux compartiments sont créés de part et d'autre de la paroi de séparation.

Selon une caractéristique possible de l'invention, la paroi de séparation est montée pivotante dans le caisson et peut passer d'une position de fermeture pour laquelle elle s'étend perpendiculairement à un axe longitudinal de la galerie de rangement, à une position d'ouverture pour laquelle elle s'escamote dans ladite galerie de rangement en s'étendant parallèlement audit axe longitudinal. De cette manière, la galerie de rangement est très souple d'utilisation, car elle peut ne présenter qu'un seul compartiment s'étendant sur toute sa longueur, ou présenter deux compartiments distincts de plus faible longueur.

L'invention a pour autre objet un hayon de coffre arrière, avec les caractéristiques de la revendication 10, pour la réalisation d'un véhicule selon l'invention.

Selon l'invention, le hayon comporte un panneau et un caisson constituant un habillage dudit hayon et qui est fixé audit panneau, une galerie de rangement étant aménagée dans le caisson en étant obturée par le panneau, ladite galerie de rangement traversant le caisson en débouchant de chaque côté de celui-ci sur l'extérieur dudit caisson.

Un véhicule selon l'invention présente l'avantage de posséder un espace de rangement supplémentaire grâce à un réajustement structurel simple et judicieux d'une pièce déjà existante. Il en résulte qu'il n'a pas été nécessaire d'ajouter une pièce additionnelle dans le véhicule pour obtenir cet espace de rangement qui serait une source de coût et d'encombrement supplémentaires. Cet espace de rangement a l'avantage d'être facilement accessible, sans outil et sans avoir recours à des manipulations compliquées et contraignantes.

On donne ci-après une description détaillée d'un mode de réalisation préféré d'un véhicule selon l'invention, en se référant aux figures ci-après :
[Fig. 1] La figure 1 est une vue en perspective d'une zone arrière d'un véhicule selon l'invention, montrant le hayon dans une position d'ouverture,
[Fig. 2] La figure 2 est une vue de côté du hayon de la figure 1,
[Fig. 3] La figure 3 est une vue en perspective et en éclaté d'un premier côté d'un habillage de hayon d'un véhicule selon l'invention,
[Fig. 4] La figure 4 est une vue en perspective d'un deuxième côté d'un habillage de hayon d'un véhicule selon l'invention, les deux boites de rangement étant dans une première configuration,
[Fig. 5] La figure 5 est une vue en perspective du deuxième côté de l'habillage de la figure 4, les deux boites de rangement étant dans une deuxième configuration,
[Fig. 6] La figure 6 est une vue en perspective sous un autre angle du premier côté de l'habillage de la figure 3,
[Fig. 7] La figure 7 est une vue en perspective d'une zone d'un habillage de hayon d'un véhicule selon l'invention montrant un enjoliveur de retenue fixé audit habillage,
[Fig. 8] La figure 8 est une vue en perspective d'un enjoliveur de retenue.

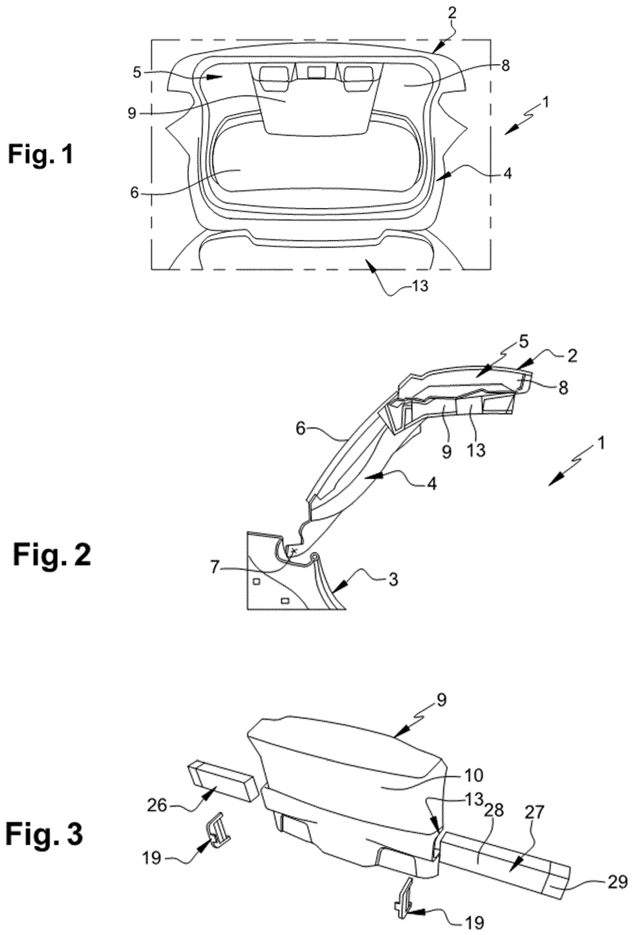

En se référant aux figures 1 et 2, un véhicule 1 selon l'invention comprend un hayon 2 permettant d'accéder à un coffre arrière 3 du véhicule 1. Ce hayon 2 est schématiquement constitué de deux segments 4, 5 sensiblement plans, dont un premier segment 4 porte une vitre arrière 6 et dont un deuxième segment 5 est plein. Ces deux segment 4, 5 sont dans la continuité l'un de l'autre et inclinés l'un par rapport à l'autre. Ce hayon 2 est monté en rotation autour d'un axe de rotation 7 transversal Y du véhicule traversant un bord du premier segment 4. Ce hayon 2 peut ainsi passer d'une position de fermeture pour laquelle le premier segment 4 est placé au-dessus du deuxième segment 5, qui s'étend dans un plan sensiblement vertical, à une position d'ouverture comme cela est illustré aux figures 1 et 2, pour lequel le deuxième segment 5 s'étend dans un plan sensiblement horizontal en étant placé au-dessus du premier segment 4.

Le deuxième segment plein 5 possède un panneau métallique 8 élargi dictant les dimensions dudit deuxième segment 5, et un habillage interne 9 sous la forme d'un caisson fixé à une surface interne dudit panneau métallique 8, les dimensions de cet habillage 9 étant inférieures à celles du panneau métallique 8.

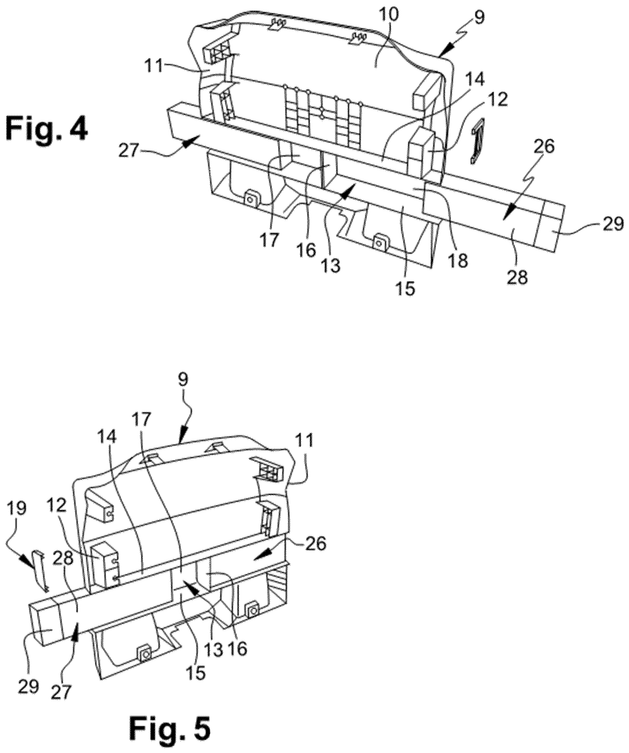

Cet habillage interne 9 qui est visible sur les figures 3 à 8, se présente sous la forme d'une coque en plastique présentant schématiquement une paroi principale 10 bordée par deux tronçons latéraux 11, 12 s'étendant perpendiculairement à ladite paroi principale 10, lesdits deux tronçons latéraux 11, 12 étant parallèles et séparés.

Pour obtenir un véhicule 1 selon l'invention, l'habillage interne 9 a été modifié de manière à faire apparaitre une galerie de rangement 13, délimitée par deux parois planes et parallèles 14, 15, joignant les deux tronçons latéraux 11, 12 de l'habillage interne 9. Ces deux parois planes et parallèles 14, 15 s'étendent perpendiculairement à la paroi principale 10 de l'habillage interne 9, et perpendiculairement aux deux tronçons latéraux 11, 12 dudit habillage interne 9. Par rapport au véhicule, la galerie de rangement 13 s'étend suivant un axe transversal Y dudit véhicule. Cette galerie de rangement 13 est également délimitée par la paroi principale 10 de l'habillage interne 9. Cette galerie de rangement 13 débouche sur les deux tronçons latéraux 11, 12 de l'habillage interne 9 et comporte donc deux extrémités ouvertes au niveau desdits deux tronçons latéraux 11, 12. Lorsque l'habillage interne 9 est fixé au panneau métallique 8 du deuxième segment 5 du hayon 2, la galerie de rangement 13 est délimitée par ledit panneau métallique 8. La galerie de rangement 13 possède un axe longitudinal qui s'étend entre les deux tronçons latéraux 11, 12 de l'habillage interne 9 et possède une section transversale de forme rectangulaire. Cette forme rectangulaire de la section transversale est particulièrement adaptée à un véhicule 1 selon l'invention, mais n'est nullement limitative pour ledit véhicule, d'autres formes telles que triangulaire ou circulaire peuvent également convenir. La galerie de rangement 13 présente une paroi de séparation 16 s'étendant à l'intérieur de ladite galerie 13 en étant perpendiculaire à un axe longitudinal de celle-ci. Cette paroi de séparation 16 est plane et de faible épaisseur, et matérialise une section transversale de la galerie de rangement 13. Une fois que l'habillage interne 9 est monté sur le panneau métallique 8, cette paroi de séparation 16 obture complètement la galerie de rangement 13. Préférentiellement, la paroi de séparation 16 occupe une position centrale dans la galerie de rangement 13, et permet de séparer deux compartiments 17, 18 identiques de ladite galerie de rangement 13. Selon une variante de réalisation d'un véhicule selon l'invention, la paroi de séparation 16 est montée pivotante dans la galerie de rangement 13, entre une position d'ouverture pour laquelle est rangée contre l'une des deux parois planes 14, 15 délimitant ladite galerie 13, et une position de fermeture pour laquelle elle obture cette galerie 13 en s'étendant perpendiculairement à un axe longitudinal de celle-ci. Dans la position d'ouverture, la paroi de séparation 16 s'étend parallèlement aux parois planes 14, 15 délimitant la galerie de rangement 13.

En se référant aux figures 3, 4, 7 et 8, les deux extrémités de la galerie 13 de rangement sont obturées chacune par un enjoliveur 19 qui se fixe à l'habillage interne 9. Cet enjoliveur 19 a une double fonction :
- améliorer le rendu visuel du hayon 2 en faisant disparaitre les deux ouvertures d'extrémité disgracieuses de la galerie de rangement 13,
- assurer une retenue des objets qui seraient stockés à l'intérieur de la galerie de rangement 13, notamment lorsque le véhicule 1 aborde un virage ou subit une phase de freinage ou d'accélération marquée.

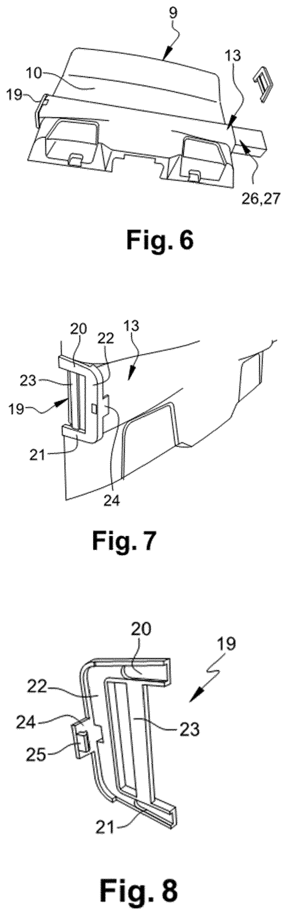

En se référant aux figures 7, 8, chaque enjoliveur 19 possède deux segments latéraux 20, 21 parallèles, reliés entre eux par un segment de liaison 22 joignant deux extrémités desdits segments latéraux 20, 21 en étant perpendiculaires à ceux-ci. Une barre 23 parallèle au segment de liaison joint des zones centrales des deux segments latéraux 20, 21. Tous les segments 20, 21, 22 de l'enjoliveur 19 ainsi que la barre 23 sont rectilignes. Une patte de fixation 24 prenant naissance sur le segment de liaison 22 et s'étendant perpendiculairement audit segment de liaison 22, porte un clip 25 de fixation s'étendant perpendiculairement à ladite patte de fixation 24.

En se référant à la figure 7, l'enjoliveur 19 est fixé par clippage dans l'habillage interne 9 du deuxième segment 5, de manière à s'étendre parallèlement à la paroi de séparation 16 de la galerie de rangement 13, et donc perpendiculairement à un axe longitudinal de ladite galerie de rangement 13. De par sa conception, l'enjoliveur 19 est ajouré, et une fois qu'il a été fixé à l'habillage interne 9, il obture la galerie de rangement 13 tout en permettant à un individu de visualiser directement à travers ledit enjoliveur 19 l'état de chargement de ladite galerie de rangement 13. Selon une autre variante de réalisation d'un véhicule selon l'invention, cet enjoliveur 19 est plein et agit comme un couvercle d'obturation de la galerie de chargement 13. La fixation de l'enjoliveur 19 à l'habillage interne 9 s'effectue par l'intermédiaire du clip 25 qui est inséré dans une ouverture dudit habillage interne 9. Les objets qui peuvent être stockés dans la galerie de rangement 13 peuvent par exemple être un triangle de signalisation, un gilet de sécurité ou des chiffons. Ces objets peuvent être, soit directement stockés dans la galerie de rangement 13, soit être préalablement rangés dans deux boites de rangement 26, 27 séparées, avant que lesdites boites 26, 27 ne soient directement insérées dans ladite galerie de rangement 13.

En se référant aux figures 3, 4, 5 et 6, chacune des boites de rangement 26, 27 est de forme parallélépipédique et comprend un corps de réception 28 et un couvercle 29, ledit couvercle 29 venant s'emboiter sur le corps de réception 28 pour l'obturer. Ces boites de rangement 26, 27 sont allongées et présentent une section transversale de forme rectangulaire dont les dimensions sont inférieures à celle de la galerie de rangement 13. Les boites de rangement 26, 27 sont d'abord remplies avec les différents objets à stocker, puis sont ensuite rentrées dans la galerie de rangement 13 par coulissement jusqu'à venir en butée contre la paroi de séparation 16. Une fois que les boites de rangement 26, 27 ont été placées dans la galerie de rangement 13, les enjoliveurs 16 sont fixés à l'habillage interne 9 pour empêcher lesdites boites 26, 27 de ressortir de ladite galerie de rangement 13.

Pour un véhicule 1 selon l'invention, différentes configurations peuvent être obtenues :
- La paroi de séparation 16 peut occuper une position centrale ou excentrée dans la galerie de rangement 13, permettant d'obtenir respectivement deux compartiments identiques ou deux compartiments de tailles différentes,
- La paroi de séparation 16 est montée pivotante dans la galerie de rangement 13 et peut s'escamoter dans celle-ci, de sorte que ladite galerie ne définisse qu'un seul compartiment,
- Les objets à stocker peuvent être directement insérés dans la galerie de rangement 13, ou être préalablement rangés dans des boites de rangement 26, 27 avant que celles-ci ne soient insérées dans ladite galerie de rangement 13.

## Revendications

1. Véhicule (1) comprenant un hayon (2) monté pivotant entre une position de fermeture pour laquelle il clôt un coffre arrière (3) dudit véhicule et une position d'ouverture pour laquelle il permet d'accéder audit coffre arrière (3), ledit hayon (2) comportant un panneau (8) et un caisson (9) constituant un habillage interne dudit hayon (2) et qui est fixé audit panneau (8), une galerie de rangement (13) s'étendant suivant un axe transversal Y du véhicule est aménagée dans le caisson (9) en étant obturée par le panneau (8), **caractérisé en ce que** les deux extrémités de ladite galerie de rangement (13) considérées le long dudit axe transversal Y, débouchent chacune sur l'extérieur dudit caisson (9).

2. Véhicule selon la revendication 1, **caractérisé en ce que** la galerie de rangement (13) possède une section transversale de dimension constante sur toute sa longueur.

3. Véhicule selon la revendication 2, **caractérisé en ce que** la section transversale de la galerie de rangement (13) est de forme rectangulaire.

4. Véhicule selon l'une quelconque des revendications 1 à 3, **caractérisé en ce que** chacune des deux extrémités de la galerie de rangement (13) considérées suivant un axe transversal Y du véhicule est obturée par un enjoliveur (19) qui est fixé au caisson (9) et qui permet de retenir des objets qui seraient stockés dans ladite galerie de rangement (13).

5. Véhicule selon la revendication 4, **caractérisé en ce que** les enjoliveurs (19) sont fixés au caisson (9) par clippage.

6. Véhicule selon l'une quelconque des revendications 4 ou 5, **caractérisé en ce que** les enjoliveurs (19) sont ajourés pour permettre de visualiser l'état de remplissage de la galerie de rangement (13).

7. Véhicule selon l'une quelconque des revendications 1 à 6, **caractérisé en ce qu'**il comporte au moins une boite de rangement (26, 27) destinée à venir se loger dans la galerie de rangement (13), et **en ce que** ladite boite de rangement (26, 27) est destinée à stocker des objets.

8. Véhicule selon la revendication 7, **caractérisé en ce que** le véhicule comporte deux boites de rangement (26, 27) destinées à venir se loger simultanément dans la galerie de rangement (13), et **en ce que** ladite galerie de rangement (13) comprend une paroi de séparation (16) s'étendant perpendiculairement à un axe longitudinal de la galerie de rangement (13) et destinée à créer deux compartiments (17, 18) dans la galerie de rangement (13) pour recevoir chacun une boite de rangement (26, 27).

9. Véhicule selon la revendication 8, **caractérisé en ce que** la paroi de séparation (16) est montée pivotante dans le caisson (9) et peut passer d'une position de fermeture pour laquelle elle s'étend perpendiculairement à un axe longitudinal de la galerie de rangement (13), à une position d'ouverture pour laquelle elle s'escamote dans ladite galerie de rangement (13) en s'étendant parallèlement audit axe longitudinal.

10. Hayon (2) de coffre arrière (3) pour la réalisation d'un véhicule (1) selon l'une quelconque des revendications 1 à 9, comportant un panneau (8) et un caisson (9) constituant un habillage dudit hayon (2) et qui est fixé audit panneau (8), une galerie de rangement (13) étant aménagée dans le caisson (9) en étant obturée par le panneau (8), **caractérisé en ce que** ladite galerie de rangement (13) traverse le caisson (9) et débouche de chaque côté de celui-ci sur l'extérieur dudit caisson (9).

## Patentansprüche

1. Fahrzeug (1), beinhaltend eine Heckklappe (2), die zwischen einer Schließstellung, in der sie einen Kofferraum (3) des Fahrzeugs schließt, und einer Offenstellung, in der sie den Zugang zu dem Kofferraum (3) gestattet, schwenkbar montiert ist, wobei die Heckklappe (2) eine Platte (8) und eine Kassette (9), die eine Innenverkleidung der Heckklappe (2) bildet und an der Platte (8) befestigt ist, umfasst, wobei ein Staufach (13), das sich entlang einer Querachse Y des Fahrzeugs erstreckt, in der Kassette (9) eingerichtet ist und dabei durch die Platte (8) verschlossen wird, **dadurch gekennzeichnet, dass** die zwei entlang der Querachse Y betrachteten Enden des Staufachs (13) jeweils auf der Außenseite der Kassette (9) münden.

2. Fahrzeug nach Anspruch 1, **dadurch gekennzeichnet, dass** das Staufach (13) über seine gesamte Länge einen Querschnitt konstanter Größe besitzt.

3. Fahrzeug nach Anspruch 2, **dadurch gekennzeichnet, dass** der Querschnitt des Staufachs (13) eine rechteckige Form aufweist.

4. Fahrzeug nach einem der Ansprüche 1 bis 3, **dadurch gekennzeichnet, dass** jedes der zwei entlang einer Querachse Y des Fahrzeugs betrachteten Enden des Staufachs (13) durch eine Abdeckung (19) verschlossen wird, die an der Kassette (9) befestigt ist und gestattet, Objekte, die in dem Staufach (13) gelagert werden, zurückzuhalten.

5. Fahrzeug nach Anspruch 4, **dadurch gekennzeichnet, dass** die Abdeckungen (19) durch Einclipsen an der Kassette (9) befestigt sind.

6. Fahrzeug nach einem der Ansprüche 4 oder 5, **dadurch gekennzeichnet, dass** die Abdeckungen (19) durchbrochen sind, um den Füllzustand des Staufachs (13) sichtbar zu machen.

7. Fahrzeug nach einem der Ansprüche 1 bis 6, **dadurch gekennzeichnet, dass** es mindestens einen Staukasten (26, 27) umfasst, der dazu bestimmt ist, in dem Staufach (13) aufgenommen zu werden, und dass der Staukasten (26, 27) dazu bestimmt ist, Objekte zu lagern.

8. Fahrzeug nach Anspruch 7, **dadurch gekennzeichnet, dass** das Fahrzeug zwei Staukästen (26, 27) umfasst, die dazu bestimmt sind, gleichzeitig in dem Staufach (13) aufgenommen zu werden, und dass das Staufach (13) eine Trennwand (16) beinhaltet, die sich senkrecht zu einer Längsachse des Staufachs (13) erstreckt und dazu bestimmt ist, zwei Kammern (17, 18) in dem Staufach (13) zu erzeugen, um jeweils einen Staukasten (26, 27) aufzunehmen.

9. Fahrzeug nach Anspruch 8, **dadurch gekennzeichnet, dass** die Trennwand (16) schwenkbar in der Kassette (9) montiert ist und von einer Schließstellung, in der sie sich senkrecht zu einer Längsachse des Staufachs (13) erstreckt, in eine Offenstellung, in der sie in dem Staufach (13) versenkt ist, indem sie sich parallel zu der Längsachse erstreckt, übergehen kann.

10. Heckklappe (2) eines Kofferraums (3) zur Herstellung eines Fahrzeugs (1) nach einem der Ansprüche 1 bis 9, umfassend eine Klappe (8) und eine Kassette (9), die eine Verkleidung der Heckklappe (2) bildet und an der Platte (8) befestigt ist, wobei ein Staufach (13) in der Kassette (9) eingerichtet ist und dabei von der Platte (8) verschlossen wird, **dadurch gekennzeichnet, dass** das Staufach (13) die Kassette (9) durchquert und auf jeder Seite derselben auf der Außenseite der Kassette (9) mündet.

## Claims

1. Vehicle (1) comprising a tailgate (2) pivotingly mounted between a closed position in which it closes a rear luggage compartment (3) of said vehicle and an open position in which it gives access to said rear luggage compartment (3), said tailgate (2) including a panel (8) and a shell (9) forming an internal lining of said tailgate (2) and which is fastened to said panel (8), a storage area (13) extending along a transverse axis Y of the vehicle is formed in the shell (9) and closed off by the panel (8), **characterized in that** each of the two ends of said storage area (13), considered along said transverse axis Y, opens on the outside of said shell (9).

2. Vehicle according to Claim 1, **characterized in that** the storage area (13) has a cross section of constant dimension over its entire length.

3. Vehicle according to Claim 2, **characterized in that** the cross section of the storage area (13) is rectangular.

4. Vehicle according to any one of Claims 1 to 3, **characterized in that** each of the two ends of the storage area (13), considered along a transverse axis Y of the vehicle, is concealed by a trim element (19) that is fastened to the shell (9) and used to hold objects stored in said storage area (13).

5. Vehicle according to Claim 4, **characterized in that** the trim elements (19) are snap-fastened to the shell (9).

6. Vehicle according to either of Claims 4 and 5, **characterized in that** the trim elements (19) are perforated to enable the filling state of the storage area (13) to be seen.

7. Vehicle according to any one of Claims 1 to 6, **characterized in that** it includes at least one storage box (26, 27) intended to be housed in the storage area (13), and **in that** said storage box (26, 27) is intended to store objects.

8. Vehicle according to Claim 7, **characterized in that** the vehicle includes two storage boxes (26, 27) intended to be housed simultaneously in the storage area (13), and **in that** said storage area (13) comprises a partition wall (16) extending perpendicular to a longitudinal axis of the storage area (13) and intended to create two compartments (17, 18) in the storage area (13), each receiving a storage box (26, 27).

9. Vehicle according to Claim 8, **characterized in that** the partition wall (16) is pivotingly mounted in the shell (9) and can be moved from a closed position, in which it extends perpendicular to a longitudinal axis of the storage area (13), to an open position in which it is retracted into said storage area (13) and extends parallel to said longitudinal axis.

10. Tailgate (2) of a rear luggage compartment (3) for a vehicle (1) according to any one of Claims 1 to 9, including a panel (8) and a shell (9) forming a lining of said tailgate (2) and which is fastened to said panel (8), a storage area (13) being formed in the shell (9) and closed off by the panel (8), **characterized in that** said storage area (13) passes through the shell (9) and opens on both sides thereof on the outside of said shell (9).
